# EUROPEAN PATENT APPLICATION

(11) **EP 1 241 024 A1**
(43) Date of publication of application: **18.09.2002**
(21) Application number: 01304016.7
(22) Date of filing: 02.05.2001
(51) Int. Cl.: B60B 3/14, B60B 3/16

(54) **Aligning means for motor vehicle wheels**

(30) Priority: 16.03.2001 ZA 200102218
(71) Applicant: TSW Manufacturing (Proprietary) Limited, Babelegi, Gauteng (ZA)
(72) Inventor: Gilley, Ian William, Hammanskraal 0400 (ZA); Couzyn, Nolan Lloyd, Morning Side, Gauteng (ZA)
(74) Representative: Marlow, Nicholas Simon

(57) **Abstract**

The invention provides aligning means for aligning apertures in a motor vehicle wheel or wheel adapter, and a hub for securing purposes, comprising an oversize aperture 11 in the wheel or adapter, a socket formation 10 concentrically disposed relative the oversize aperture, and of a larger diamener than the aperture, and a disc or washer 13 located in the socket and rotatable therein about the axis of the socket, the disc member having an aperture 14 therethrough which is eccentrically disposed relative to the axis thereof, so that the aperture in the disc member can be aligned with the adjacent aperture through rotational adjustment of the disc member, the oversize aperture having a large enough diameter to expose the eccentric aperture in selected or all angular positions of the disc member.

## Description

### Field of the Invention

**THIS** invention relates to aligning means which is adapted to align apertures with one another, particularly suitable for motor vehicle wheels.

### Description of Prior Art

It is known that in order to align apertures in adjacent body members, one or both apertures could be in the form of slots. Movement of a fastener in a slot thus permits alignment or adjustment of the body members. Such an arrangement is however not suitable for motor vehicle wheels where maximum contact between the fastener and the body member in the zone of the slot is required. It will be understood that contact at the zone of the slot will be on opposed shoulders thereof only.

In the automotive industry, wheels are attached to a vehicle by means of threaded fasteners either in the form of bolts, or studs and nuts. The pitch circle diameter (PCD) of the fasteners , varies from vehicle to vehicle. An arrangement whereby a single wheel will fit vehicles with different PCD's, will be recognised as hugely beneficial. Thus the number of wheel variations held by stockists be reduced. Likewise, manufacturers will be required to produce less variations.

### Object of the Invention

It is accordingly an object of the present invention to provide a novel aligning means for a motor vehicle wheel which will have advantages over the prior art disclosed above.

In one application of the invention, it is an object thereof to provide aligning means whereby a single wheel will fit a predetermined range of vehicles with different PCD's.

### Disclosure of the Invention

According to the invention, such aligning means for aligning an aperture in a motor vehicle wheel or wheel adapter, with an adjacent aperture for securing purposes, comprises an oversize aperture in the wheel or adapter, a socket formation concentrically disposed relative the oversize aperture therein, and of a larger diameter than such aperture, and a disc or washer member located in the socket and rotatable therein about the axis of the socket, the disc member having an aperture therethrough which is eccentrically disposed relative to the axis thereof, so that the aperture in the disc member can be aligned with the adjacent aperture through rotational adjustment of the disc member. Once the apertures are aligned, the body members may be secured to one another by means of threaded fasteners. The oversize aperture may be circular or of a non-circular shape such as oval or polygonal in plan view. The term "oversize aperture" means an aperture having a large enough diameter to expose the "eccentric aperture" in selected or all angular positions of the disc member.

In a preferred arrangement, the interior extremity of the socket formation will be of a concave profile, preferably tapered at between 15° and 45°, preferably 30° to the axis of the socket, and the face of the disc member which bears on such concave formation similarly profiled.

Also according to this aspect of the invention, sufficient clearance will be permitted in the socket, between the outer periphery of the disc member and the eccentric aperture, to permit a tool to engage a fastener which passes through the eccentric aperture.

The alignment means of the invention can thus be applied to a wheel of a motor vehicle, or an adapter, whereby a single wheel will fit vehicles with different PCD's.

With such an arrangement, a motor vehicle wheel in accordance with the invention comprises a plurality of oversize apertures spaced about the centre of the wheel on a predetermined PCD, and adapted to receive a stud or bolt therethrough for securing the wheel to a hub of a motor vehicle, the arrangement being one wherein each aperture is provided with the aligning means of the invention disclosed herein. Thus each aperture will define a concentric socket within which a disc member is disposed, the disc member having an eccentric aperture therein for receiving the stud or bolt, and being angularly adjustable to align with an aperture in the hub of the vehicle. As mentioned above, with such an arrangement, a wheel is provided which is capable of fitting hubs with different PCD's. Thus, PCD's which differ by four times the eccentricity of the aperture in the disc, or less, can be accommodated by a single wheel.

A further feature of the invention comprises the provision of clearance in the socket between the outer periphery of the disc member and the eccentric aperture to permit a tool to engage a fastener which passes through the eccentric aperture.

Also according to the invention, the bearing end of the disc member is provided with a leading end in the form of a longitudinally directed spigot formation which is receivable within the oversize aperture.

A further feature of the invention comprises retaining means for retaining the disc member within position within the socket formation. Locking means could also be provided for locking the disc formation in a selected angular position within the socket formation. For purposes of adjustment, graduations could be provided in the socket formation, or on the disc member, in order to facilitate angular adjustment of the latter within the socket formation.

The invention includes within its scope the aligning means disclosed above, as well as a wheel including such aligning means and a disc member for use in such aligning means.

### Brief Description of the Drawings

In order more clearly to illustrate the invention an embodiment thereof is described hereunder purely by way of example without limiting the scope of the invention, with reference to the accompanying drawings wherein:
- Figure 1: is a schematic sectioned elevation of a wheel rim for a motor vehicle including alignment means in accordance with the invention;
- Figure 2: is a perspective view of a disc or washer member which forms part of alignment means in accordance with the invention;
- Figure 3: is a sectioned elevation of the disc in Figure 2;
- Figure 4: is a plan view of the central zone of the wheel rim in Figure 1 adjusted to accommodate a relatively small PCD of a wheel hub;
- Figure 5: is a view of a section on line V-V in Figure 4;
- Figure 6: is a plan view of the central portion of the wheel rim in Figure 1 adjusted to accommodate a relatively larger PCD of a wheel hub; and
- Figure 7: is the view of a section on line VII-VII in Figure 6.

### Detailed Description of Drawings

Referring to the drawings, aligning means in accordance with the invention comprises a socket 10 which is concentric with an oversize aperture 11 which passes through a body, such as, but not limited to a wheel rim 12.

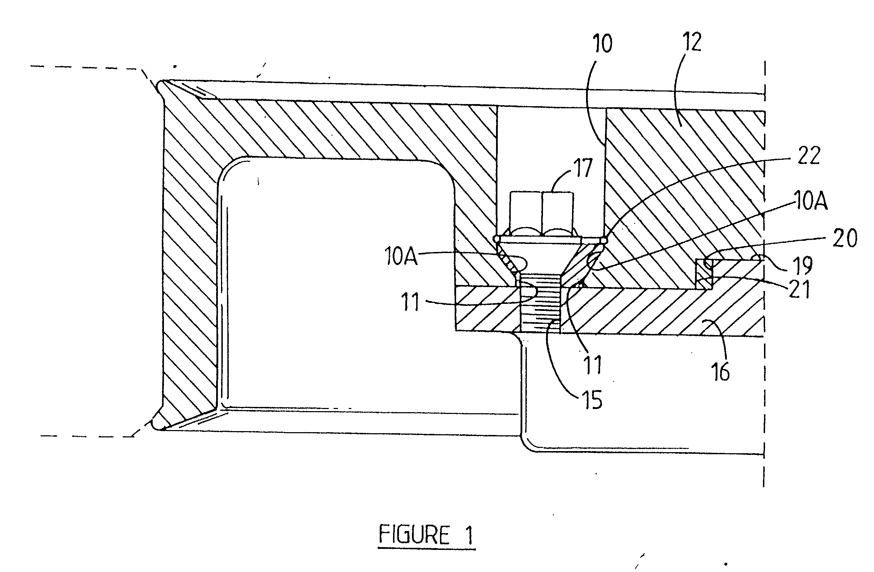

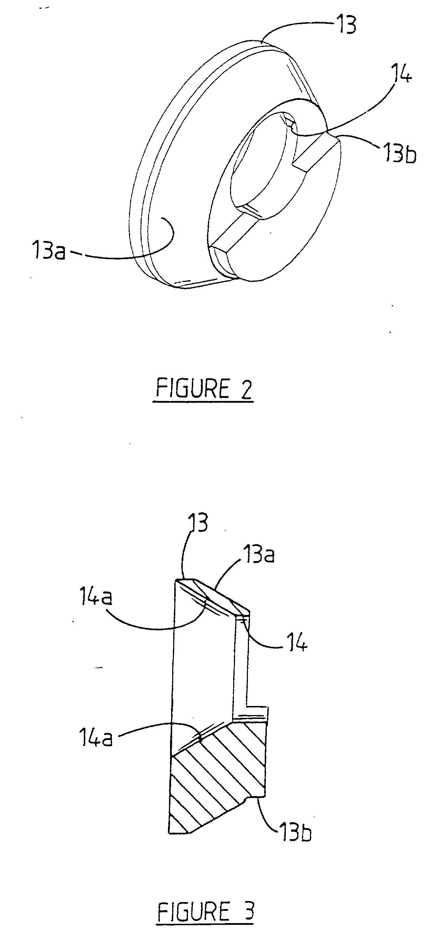

Disposed within the socket 10 is a disc or washer 13 which is angularly moveable about the axis of the socket 10. The disc 10 is provided with a an eccentric aperture 14, Figures 2 and 3, therethrough so that angular movement of the disc 13 will adjust the aperture relative to the oversize aperture 11 in the body 12. In this way the aperture 14 of the disc 13 can be aligned with an aperture 15 of a second body 16 such as a hub, Figure 1, for purposes of securing the bodies 12, 16, to one another by means of a fastener such as a stud or a bolt 17. The oversize aperture 11 is thus of large enough diameter to expose the eccentric aperture 14 in all angular positions of the disc. Where the oversize aperture 11 is non-circular, for example triangular in plan view, the eccentric aperture will be exposed in three positions of the disc 13.

In a preferred arrangement the base 13a of the disc 13 which bears against the inner extremity 10a of the socket 10 will be of a convex configuration, and the extremity 10a of the socket 10 likewise be of a mating concave configuration. The bearing surface 13a of the disc 13 will preferably be tapered to provide a centering action.

In order to enhance such centering action, the leading end of the bearing surface of the disc may be provided with a longitudinally directed spigot formation 13b which is receivable within the aperture 11 in the body 12, or a step formation therein, not shown. It has been found that such an arrangement will prevent tilting of the disc 13 within the socket 10, and ensure that the aperture in the disc remains axially orientated. The taper will in most instances be between 15° and 45°, preferably 30° relative to the axis of the oversize aperture 14.

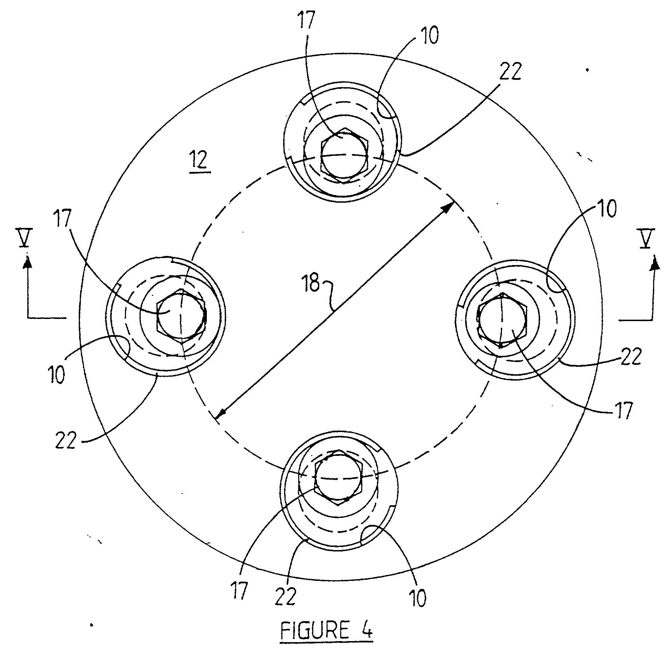

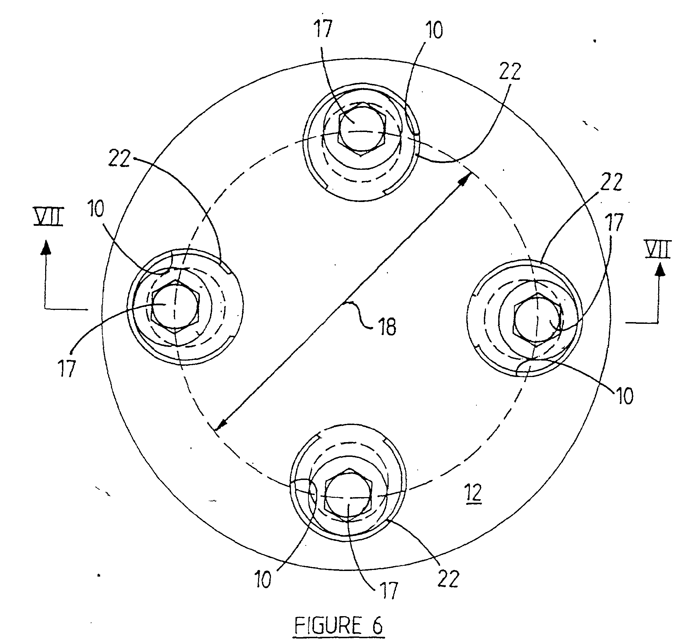

As stated above, in one application of the invention, the aligning means will be applied to a wheel 12 of a road vehicle. A plurality of oversized apertures 11 which are circumferentially spaced about the centre of the wheel 12 on a pitch circle diameter 18 (PCD), Figure 4 and Figure 6, are each provided with the aligning means of the invention. Each oversize aperture 11 is thus provided with a concentric socket 10 of larger diameter than the oversize aperture 11. A disc or washer 13 which is angularly adjustable about the axis of the socket 10 is disposed in each socket, and has an aperture 14 therethrough which matches the diameter of a fastener 17 for securing the wheel 12 to a hub 16 of a motor vehicle, not shown. The fastener could be in the form of a stud or bolt as illustrated. Where the head of the bolt 17, or the nut as the case may be, has a tapered head as illustrated, the aperture 14 in the disc 13 will likewise have a tapered surface 14a, Figure 3. Thus in use, the wheel 12 will be centralised on the hub 16 on a conventional centering spigot 19 with an annular adapter ring 20 if necessary. The spigot 19 (and ring 20) thus extends from the hub 16 and which is a snug fit within a central recess 21 of the wheel 12. Thereafter each disc 13 will be angularly adjusted until its aperture 14 is aligned with an aperture 15 in the hub 16, whereupon a threaded fastener 17 in the form of a bolt can be passed through the aperture 14 in the disc 13 to engage a thread in the aperture 15. Where the hub 16 is provided with a plurality of outwardly extending stud-type fasteners, not shown, these will each be disposed within an aperture 14 of a disc 13, whereupon the wheel will be manoeuvred to engage the central spigot 19 of the hub 16.

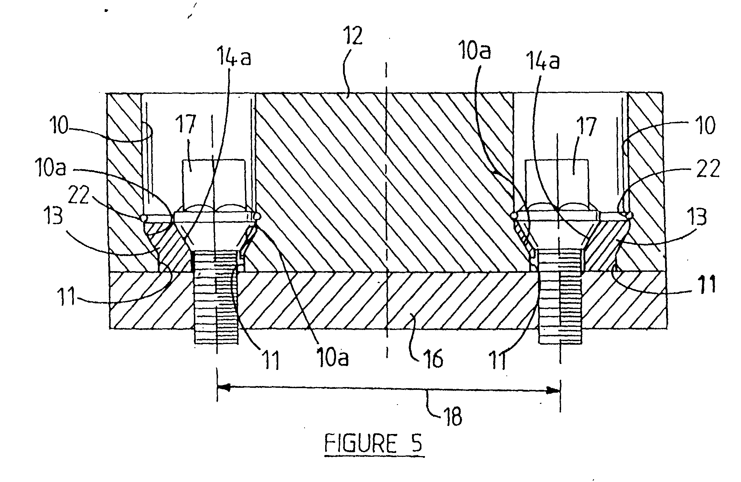

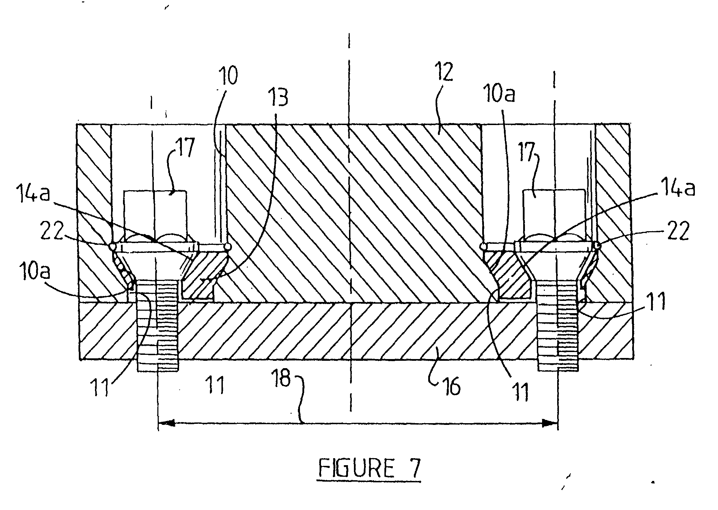

The arrangement above will permit a single wheel 12 to fit a number of hubs 16 with different PCD's 18. Thus Figure 4 and Figure 5, illustrate an arrangement wherein the wheel 12 is fitted to a hub 16 with a relatively small PCD 18. In Figure 6 and Figure 7 on the otherhand, the PCD 18 is relatively large in comparison to the arrangement in Figure 4 and Figure 5. In Figure 6, 7, the PCD is larger by four times the eccentricity of the aperture 14. It will be appreciated that PCD's which are intermediate to those discussed above, can also be accommodated by the arrangement of the invention. It will be understood that the degree of eccentricity of the aperture 14 can be varied, and where necessary the diameter of the socket 10 can be enlarged to increase eccentricity. It is however required that sufficient clearance be left on the disc or washer 13 to enable a tool to engage the head of the bolt 17, and to accommodate any outwardly directed collar formation on the bolt 17.

Doubtless variations of the invention exist in detail, and it is contemplated that these should all fall within the scope of the consistory clauses. For example, if desirable retaining means such as circlip 22 or the like could be provided for holding the disc 13 in position within the socket 10. Locking means, not shown, could also be provided for locking the disc 13 in a predetermined angular orientation. With such an arrangement therefor, the discs 13 can be locked into a determined position once they have been set to a particular PCD. In this regard, also graduations, not shown, can be provided on the disc 13 or in the socket formation to facilitate angular adjustment thereof.

## Claims

1. Aligning means for aligning apertures in a motor vehicle wheel or adapter therefor, and an adjacent aperture for securing purposes, comprising an oversize aperture in the wheel or adapter, a socket formation concentrically disposed relative the oversize aperture and of a larger diameter than such aperture, and a disc or washer member located in the socket and rotatable therein about the axis of the socket, the disc member having an aperture therethrough which is eccentrically disposed relative to the axis thereof so that the aperture in the disc member can be aligned with the adjacent aperture through rotational adjustment of the disc member, the oversize aperture having a large enough diameter to expose the eccentric aperture in selected or all angular positions of the disc member.

2. The aligning means according to claim 1 wherein the oversize aperture is circular in plan view.

3. The aligning means according to claim 1 wherein the oversize aperture is of a non-circular polygonal shape in plan view.

4. The aligning means according to any one of claims 1 to 3 wherein the inner extremity of the socket formation is of a concave profile with the disc member having a face which bears on the concave profile, and such face is similarly profiled to give a self-centering effect to the disc member.

5. The centering means according to claim 4 wherein the interior extremity of the socket formation is tapered at between 15° and 45°.

6. The aligning means according to claim 5 wherein the inner extremity of the socket formation is tapered at 30°.

7. The aligning means according to any one of claims 1 to 6 wherein clearance is provided in the socket between the outer periphery of the disc member and the eccentric aperture to permit a tool to engage a fastener which passes through the eccentric aperture.

8. The aligning means according to any one of claims 1 to 7 wherein the disc member has a bearing surface which bears on the interior extremity of the socket formation, and such bearing surface is provided with a leading end in the form of a longitudinally directed spigot formation which is receivable within the oversize aperture.

9. The aligning means according to claim 8 wherein the spigot formation is part circular in cross-section.

10. The aligning means according to any one of claims 1 to 9 wherein retaining means is provided for retaining the disc member within position within the socket formation.

11. The aligning means according to any one of claims 1 to 10 wherein locking means is provided for locking the disc formation in a selected angular position within the socket formation.

12. Aligning means according to any one of claims 1 to 11 wherein graduations are provided in the socket formation or on the disc member in order to facilitate angular adjustment of the latter within the socket formation.

13. A motor vehicle wheel including the aligning means claimed in any one of claims 1 to 12 comprising a plurality of the oversize apertures spaced about the centre of the wheel on a predetermined pitch circle diameter, and adapted to receive a stud or bolt therethrough for securing the wheel to a hub of the motor vehicle.

14. A disc member for use in the aligning means according to any one of claims 1 to 13 comprising a body member which is circular in plan and having an aperture therethrough which is eccentrically disposed relative to the axis thereof, the disc member defining a bearing surface which is adapted to bare on the interior extremity of a socket formation, such bearing surface being of convex profile.

15. The disc member according to claim 14 wherein the convex profile is tapered at between 15° and 45° to the axis thereof.

16. The disc member according to claim 15 wherein the convex profile of the disc member is tapered at 30° to the axis thereof.

17. The disc member according to any one of claims 14 to 16 including a bearing face which is adapted to bear on the interior extremity of the socket formation, the bearing face being provided with a leading end in the form of a longitudinally directed spigot formation which is receivable within an oversize aperture passing through the interior extremity.
